(19) Europäisches Patentamt / European Patent Office / Office européen des brevets

(11) **EP 1 873 178 B1**

(12) **EUROPÄISCHE PATENTSCHRIFT**

(45) Veröffentlichungstag und Bekanntmachung des Hinweises auf die Patenterteilung:
**02.06.2010 Patentblatt 2010/22**

(51) Int Cl.:
*C08G 18/12* (2006.01)       *C08G 18/48* (2006.01)
*C08G 18/76* (2006.01)

(21) Anmeldenummer: **07011435.0**

(22) Anmeldetag: **12.06.2007**

(54) **Geschäumte und massive Polyurethanelastomere auf Basis von hochschmelzenden Polyisocyanaten, Verfahren zu ihrer Herstellung und ihre Verwendung**

Foamed and massive polyurethane elastomers on the basis of HMP polyisocyanates, method for its manufacture and use

Elastomères de polyuréthane expansés et massifs à base de polyisocianates à fusion élevée, leur procédé de fabrication et leur utilisation

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **01.07.2006 DE 102006030391**

(43) Veröffentlichungstag der Anmeldung:
**02.01.2008 Patentblatt 2008/01**

(73) Patentinhaber:
• **Bayer MaterialScience AG**
  **51368 Leverkusen (DE)**
• **Getzner Werkstoffe Holding GmbH**
  **6706 Bürs (AT)**

(72) Erfinder:
• **Nefzger, Hartmut, Dr.**
  **50259 Pulheim (DE)**
• **Barnes, James-Michael**
  **53547 Breitscheid (DE)**
• **Dietrich, Martin**
  **6830 Rankweil (DE)**
• **Wehowsky, Dirk**
  **6714 Nüziders (DE)**

(56) Entgegenhaltungen:
EP-A1- 0 579 989     EP-A2- 0 617 066
GB-A- 733 624        GB-A- 1 366 351
US-A- 3 250 796      US-A- 4 311 765

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft hochwertige Polyurethan (PUR)-Elastomere, die in einem breiten Temperaturbereich nahezu konstante Steifigkeiten und hohe Hydrolysestabilität aufweisen und die als Schwingungsisolierelemente Verwendung finden, sowie ihre Herstellung.

Vibrierende Maschinen belasten nicht nur das direkte Umfeld und beeinträchtigen zum Teil erheblich den Betrieb, sondern erhöhen oft zudem auch die Materialbruchgefahr. Außerdem gibt es empfindliche Maschinen, die zur Aufrechterhaltung ihrer korrekten Funktionsfähigkeit von Vibrationen aus ihrer Umgebung isoliert werden müssen. In beiden Fällen liegt die Lösung des Problems in einer entsprechenden Schwingungsisolierung der Geräte von ihrer Umgebung. Dementsprechend breit sind die Einsatzbereiche von Materialien, sowie die Art der Materialien, die diese Aufgabe lösen.

Für den Eisenbahnbereich ist diese Problematik in besonderem Maße gegeben, da Schwingungen, die vom rollenden Rad erzeugt werden, über den Gleisoberbau an die Umgebung übertragen werden und zudem den Gleisoberbau, sowie auch die Fahrzeuge selbst im Laufe der Zeit schädigen. Letztere Aspekte bedeuten einen erhöhten Wartungs- und Instandhaltungsaufwand, aber auch einen verminderten Fahrkomfort.

Aus diesen Gründen existieren bereits eine ganze Reihe technischer Lösungen, wie z.B. elastische Zwischenlagen mit einer definierten Steifigkeit, welche direkt unter dem Schienenfuß eingebaut werden und dadurch die Elastizität des Schotteroberbaues erhöhen.

Moderne Eisenbahnstrecken werden zunehmend als Feste-Fahrbahn-Systeme ausgeführt, d.h. an Stelle von einzelnen Schwellen wird eine Betontrasse gegossen, auf der die Schienen mittels geeigneter Befestigungselemente fixiert werden. Ein Grund hierfür ist, dass auf diese Weise auf das früher übliche Unterschottern der Schwellen mit geeignetem grobkörnigem Schottermaterial, z.B. Porphyr, verzichtet werden kann. Nachteilig an derartigem Schotter ist, dass er im Laufe der Zeit in Folge der hohen mechanischen Beanspruchung klein gemahlen wird und relativ aufwendig regelmäßig ersetzt werden muss. Besonders nachteilig ist weiterhin, dass Schotter in Folge der heute auf Schnellbahntrassen üblichen Geschwindigkeiten von z.B. mehr als 200 km/h durch Luftdruck hoch geschleudert werden kann und so nicht nur die Fahrzeuge beschädigen kann, sondern auch nach und nach aus der Trasse ausgetragen werden würde. Für die Elastizität auf solchen Strecken sorgen Zwischenplatten, die zwischen Rippenplatte und Betontragplatte eingebaut werden. Hierdurch bleibt die lastverteilende Wirkung der Schiene erhalten und Schwingungen aufgrund von Rad- und Fahrbahnunebenheiten werden verringert. Durch eine angepasste Steifigkeitsverteilung der Zwischenplatte kann die Schienenkopfauslenkung bei Zugüberfahrt reduziert werden.

Weitere technische Ausführungsformen umfassen auch Einlageplatten für Schwellenschuhe, Schwellenlager, Unterschottermatten, Lager für Masse-Feder-Systeme in verschiedenen Ausführungsvarianten, eingebettete Schienen, kontinuierliche Schienenlagerung, bis hin zu Spurrillenfüllern.

Die Wahl der Ausführungsform hängt von wirtschaftlichen und technischen Überlegungen im Einzelfall ab.

Derartige Maßnahmen tragen in Folge der damit erreichbaren Minderung der Geräuschentwicklung und Schwingungsübertragung u.a. zur Akzeptanz des Schienenverkehrs, insbesondere in dicht besiedelten Gebieten bei, also etwa Straßenbahnen, U- und S-Bahnen, in Innenstädten, aber auch bei Güterzügen auf konventionellen Trassen, die üblicherweise ebenfalls durch Innenstädte führen, ebenso wie bei schnellen Personenzügen auf Hochgeschwindigkeitstrassen, und insbesondere auch dort, wo z.B. durch enge Kurvenradien erhöhte Belastungen auftreten.

Schwingungsisolierelemente in derartigen Anwendungen können aus Polyurethan-(PUR)-Werkstoffen hergestellt werden. PUR sind hierbei solche Materialien, die unter Verwendung eines Polyisocyanates, meist Diisocyanates, eines längerkettigen Polyols, meist Diols und einer kurzkettigen organischen Verbindung mit Hydroxyl- oder Aminoendgruppen und/oder Wasser hergestellt werden.

In US-A 4 311 765 werden schwingungsdämpfende Materialien für den Eisenbahnbau beschrieben, wobei als Material zum Beispiel Polyurethane eingesetzt werden, die aus

(i) 23,9 Gewichtsteilen 1,5-Naphthalindiisocyanat,

(ii) 20 Gewichtsteilen Polytetramethylenetherglykol mit einem Molekulrgewicht von 1000,

(iii) 40 Gewichtsteilen Polytetramethylenetherglykol mit einem Molekulrgewicht von 2000,

(iv) 40 Gewichtsteilen Polycaprolactonesterpolyol mit einem Molekulrgewicht von 2000,

(v) 7,71 Gewichtsteilen bis-(Betahydroxyethyl)hydrochinonether und 0,11 Gewichtsteilen Trimethylolpropan

erhalten werden.

GB-A 1 366 351 beschreibt schwingungsdämpfende Materialien, die zum Beispiel aus Polyurethan hergestellt werden, die aus

(i) 413 Gewichtsteilen 3,3'-Bitoluylen-4,4'diisocyanat,

(ii) 243 Gewichtsteilen Polytetramethylenetherglykol mit einem Molekulargewcht von 1000,

(iii) 577,5 Gewichtsteilen Polytetramethylenetherglykol mit einem Molekulargewicht von 2000,

(iv) 577,5 Gewichtsteilen Polycaprolactonesterpolyol mit einem Molekulargewicht von 2000 und

(v) 50,83 Gewichtsteilen 4,4'-Methylen-bis-(2-chloroanilin)

erhalten werden.

Aus US-4 3 250 796 ist bekannt, dass sowohl Polyurethane auf Basis von Polytetramethylenglykolen als auch Polyurethane auf Polypropylenbasis zur Schwingungsdämpfung eingesetzt werden können.

PUR werden nach dem Gießverfahren hergestellt, wobei man im Wesentlichen zwei Prozesse unterscheidet: Zum einen das NCO-Prepolymerverfahren, bei dem langkettiges Polyol und stöchiometrisch überschüssiges Polyisocyanat zu einem NCO-Gruppen aufweisenden Prepolymer vorreagiert und dann mit der kurzkettigen organischen Verbindung mit Hydroxyl- oder Aminoendgruppen und/oder Wasser kettenverlängert wird. Zum anderen können PUR-Gießelastomere auch nach dem one-shot-Verfahren hergestellt werden, bei dem langkettiges Polyol und kurzkettige organische Verbindungen mit Hydroxyl- oder Aminoendgruppen und/oder Wasser gemischt werden und dann mit Polyisocyanat umgesetzt werden.

Nachteilig hierbei ist jedoch, dass insbesondere bei Verwendung hochschmelzender Polyisocyanate nach dem one-shot-Verfahren nur minderwertige Elastomere erhalten werden, da sogenannte Intermediates aus kurzkettigem Polyol (Kettenverlängerer) und hochschmelzendem Polyisocyanat teilweise aus der Reaktionsschmelze ausfallen, somit einer weiteren Umsetzung entzogen sind und den geordneten weiteren Molekulargewichtsaufbau verhindern. Dies ist ein Grund, weshalb das Prepolymerverfahren normalerweise zu besseren Produkten führt.

Weiterhin günstig beim Syntheseweg über Prepolymere ist, dass ein Teil der Reaktionswärme bereits durch den Prepolymerschritt vorweggenommen ist und somit die Exothermie beim eigentlichen Polymeraufbau kleiner ausfällt. Dies wirkt sich günstig auf die Geschwindigkeit des Molekulargewichtsaufbaus aus und ermöglicht längere Gießzeiten, stellt also einen Verarbeitungsvorteil dar.

Ein weiterer Grund, beispielsweise bei Verwendung von MDI (Schmelzpunkt des 4,4'-Isomeren ca. 42°C) basierenden Systemen, ist die mit der Prepolymerisierung einhergehende Absenkung des Schmelzpunktes des Polyisocyanates. Nicht nur kann MDI durch Prepolymerisierung in eine bei Raumtemperatur flüssige Form (NCO-Prepolymer) gebracht werden, was selbstverständlich die Verarbeitung im Vergleich zur festen Form deutlich vereinfacht, sondern darüber hinaus wird auch die unerwünschte Dimerisierung des monomeren Polyisocyanates deutlich verlangsamt.

Zusätzlich zu den o.g. Gesichtspunkten treten noch Materialeigenschaftsaspekte hinzu, die sich aus der Anwendung ergeben:

1. Schwingungsisolierelemente müssen eine sehr lange Lebensdauer aufweisen.

2. Schwingungsisolierelemente sollten möglichst temperatur-unabhängige Kenngrößen aufweisen. Dies gilt insbesondere für die Härte, die Dämpfungs- und Biegeeigenschaften. Wünschenswert ist es, in einem Temperaturbereich von ca. -30°C bis +110°C, also dem Gebrauchstemperaturbereich dieser Anwendung weitgehend konstante Materialeigenschaften vorzufinden.

3. Schwingungsisolierelemente sollten gegenüber Hydrolyse und Mikrobenangriff jahrelang stabil sein.

4. Schwingungsisolierelemente sollten gegenüber Ölen und Fetten eine ausreichende Quellbeständigkeit aufweisen.

5. Schwingungsisolierelemente sollten gegenüber mechanischem Abrieb ausreichend resistent sein.

6. Schwingungsisolierelemente müssen ihre ursprüngliche Gestalt im Gebrauch weitestgehend beibehalten, d.h. sollten günstige Werte bezüglich ihres Druckverformungsrestes im Gebrauchstemperaturbereich aufweisen.

Ein in dieser Anwendung im Markt etabliertes System ist "Sylomer" der Fa. Getzner, welches die meisten der o.g. Anforderungen gut erfüllt. Jedoch ist die Temperaturunabhängigkeit der Materialkenngrößen nicht optimal. So liegt z.B. der Speichermodul G' als Maß für die Biegeeigenschaften bei -30°C bei etwa 71 MPa, bei 0°C bei ca. 1,9 MPa, bei +80°C bei ca. 1,5 MPa und bei 110°C bei ca. 1,7 MPa. Somit beträgt das Verhältnis des bei -30°C und bei +110°C gemessenen Speichermoduls ca. 41:1. Ähnliches gilt auch für den Verlustfaktor tan$\delta$, der das Verhältnis von Speichermodul G' und Verlustmodul G" darstellt, somit ein Maß für den Anteil der in Wärme umgewandelten mechanischen Energie bei gegebener Temperatur ist. Hier werden bei -30°C etwa 0,498, bei 0°C ca. 0,229, bei +80°C ca. 0,006 und bei 110°C ca. 0,006 gefunden. Somit beträgt das Verhältnis des bei -30°C und bei +110°C gemessenen Verlustfaktors ca. 80:1. Erschwerend kommt diesbezüglich noch hinzu, dass der Verlustfaktor bei ca. -20°C ein Maximum aufweist.

Aufgabe der vorliegenden Erfindung war es daher, Materialsysteme zur Verfügung zu stellen, die insbesondere bezüglich der Temperaturabhängigkeit der Materialkenngrößen Speichermodul G', Verlustfaktor tan$\delta$ und Verlustmodul G" verbesserte Eigenschaften aufweisen, bei gleichzeitig guten übrigen Eigenschaftskenngrößen.

Überraschenderweise wurde gefunden, dass die gestellte Aufgabe dadurch gelöst werden kann, dass man ganz bestimmte Polyurethane aus speziellen Reaktionsmischungen von Polyetherpolyolen, deren Zusammensetzung im Folgenden näher erläutert werden wird, NDI und Kettenverlängerern sowie bei geschäumten Produkten in Kombination mit Wasser einsetzt.

Gegenstand der Erfindung sind Gießelastomere erhältlich aus

A) einem NCO Prepolymeren aus

a) einem hochschmelzenden Polyisocyanat aus der Gruppe bestehend aus 1,5-Naphthalindiisocyanat (NDI), Para-Phenylendiisocyanat (PPDI) und 3,3'-Dimethyl-4,4'-biphenyldiisocyanat (TODI), besonders bevorzugt NDI, und

b) einem Polyolgemisch aus

b1) 50 - 85 Mol.-%, bezogen auf b1) und b2), $\alpha$-Hydro-$\omega$o-hydroxy-poly(oxytetramethylen) mit Molekulargewichten von 500 bis 5000 g/mol und Hydroxylfunktionalitäten von 2,0,

b2) 15 - 50 Mol.-%, bezogen auf b1) und b2), $\alpha$-Hydro-$\omega$-hydroxy-poly(oxypropylen-1,2) und/oder $\alpha$-Hydro-$\omega$-hydroxy-poly(oxypropylen-1,2-co-oxyethylen) mit Molekulargewichten von 900 bis 4000 g/mol und Hydroxylfunktionalitäten von 1,9 bis 2,7,

wobei die Hydroxylzahl des Gemisches aus b1) und b2) im Bereich von 36 bis 90 mg KOH/g liegt
und

B) mindestens einem Kettenverlängerer ausgewählt aus der Gruppe bestehend aus aliphatischen Diolen mit zwei, bevorzugt primären Hydroxylgruppen und einem zahlenmittleren Molekulargewicht von 62 bis 202 g/mol, trifunktionellen Polyolen, Polyolen b1), Polyolen b2), Wasser und Gemischen davon sowie aromatischen Diaminen,

C) gegebenenfalls Hilfs- und Zusatzstoffen,
wobei die Kennzahl (molares Verhältnis von NCO-Gruppen zu Zerewitinoff-aktiven Gruppen aller Komponenten) in einem Bereich von 1,04 bis 1,25 liegt und der Quotient des bei -30°C und des bei 110°C gemessenen Speichermoduls G' (gemäß DIN EN ISO 6721-2) im Bereich von 0,8 bis 2,0 liegt.

Ein weiterer Gegenstand der Erfindung ist ein Verfahren zur Herstellung von Gießelastomeren nach dem Prepolymerverfahren, dadurch gekennzeichnet, dass

I) ein hochschmelzendes Polyisocyanat a) aus der Gruppe bestehend aus 1,5-Naphthalindiisocyanat (NDI), Para-Phenylendiisocyanat (PPDI) und 3,3'-Dimethyl-4,4'-biphenyldiisocyanat (TODI), besonders bevorzugt NDI, mit einem Polyolgemisch b) aus

b1) 50 - 85 Mol-%, bezogen auf b1) und b2), $\alpha$-Hydro-$\omega$-hydroxy-poly(oxytetramethylen) mit Molekulargewichten von 500 bis 5000 g/mol und OH-Funktionalitäten von 2,0 und

b2) 15 - 50 Mol-%, bezogen auf b1) und b2), $\alpha$-Hydro-$\omega$-hydroxy-poly(oxypropylen-1,2) und/oder $\alpha$-Hydro-$\omega$-hydroxy-poly(oxy-propylen-1,2-cooxyethylen) mit Molekulargewichten von 900 bis 4000 g/mol und Hydroxylfunktionalitäten von 1,9 bis 2,7,

zum NCO-Prepolymer umgesetzt wird, wobei die Hydroxylzahl des Polyolgemisches aus b1) und b2) im Bereich von 36 bis 90 mgKOH/g liegt,

II) zum NCO-Prepolymer mindestens ein Kettenverlängerer ausgewählt aus der Gruppe bestehend aus aliphatischen Diolen mit zwei bevorzugt primären Hydroxylgruppen und einem zahlenmittleren Molekulargewicht von 62 bis 202 g/mol, trifunktionellen Polyolen, Polyolen b1), Polyolen b2), Wasser und Gemischen davon sowie aromatischen Diaminen und gegebenenfalls Hilfs- und Zusatzstoffe zur Herstellung der Elastomeren gegeben werden,

wobei eine auf die eingesetzten Komponenten bezogene Kennzahl (molares Verhältnis von NCO-Gruppen zu Zerewitinoff-aktiven Gruppen) von 1,04 bis 1,25 eingestellt wird und der Quotient des bei -30°C und des bei 110°C gemessenen Speichermoduls G' im Bereich von 0,8 bis 2,0 liegt.

Polyetherpolyole b2) sind auf Hydroxylverbindungen gestartete Polyalkylenoxide mit Molmassen von 900 bis 4000 g/mol aus der Gruppe bestehend aus $\alpha$-Hydro-$\omega$-hydroxy-poly(oxypropylen-1,2) und $\alpha$-Hydro-$\omega$-hydroxy-poly(oxy-propylen-1,2-co-oxyethylen). Die Polyole können einen blockweisen oder auch einen statistischen Aufbau aufweisen. Die Polyole b2) werden bevorzugt nach dem Doppelmetallcyanid-Katalyse-Verfahren hergestellt. Sie weisen Hydroxylfunktionalitäten von 1,90 bis 2,7, bevorzugt 1,97 bis 2,20 auf.

Polyetherpolyole b1) sind lineare Polytetramethylenetherglykole mit zwei Hydroxylendgruppen, die durch Polymerisation von Tetrahydrofuran erhalten werden.

Erfindungsgemäß werden Gemische aus den vorgenannten Polyalkylenoxiden und $\alpha$-Hydro-$\omega$-hydroxy-poly (oxytetramethylen) zur Herstellung des Prepolymereren eingesetzt, wobei die Hydroxylzahl des Polyolgemisches im Bereich von 36 bis 90 mgKOH/g liegt und der Anteil des $\alpha$-Hydro-$\omega$-hydroxy-poly(oxytetramethylen), bezogen auf das Polyolgemisch im Bereich von 50 bis 85 Mol-% liegt.

Die Polyolgemische werden in einem ersten Reaktionsschritt mit hochschmelzenden Polyisocyanaten aus der Gruppe bestehend 1,5-Naphthalindiisocyanat (NDI), p-Phenylendiisocyanat (PPDI) und 3,3'-Dimethyl-4,4'-biphenyldiisocyanat (TODI), ganz besonders bevorzugt NDI zu NCO-Gruppen terminierten Prepolymeren umgesetzt, indem das Polyolgemisch auf eine Temperatur von 80 bis 150°C erwärmt und mit dem hochschmelzenden Polyisocyanat verrührt wird. Die genaue Starttemperatur für die Prepolymerbildung hängt hierbei von der Größe des Ansatzes sowie der Art des Gefäßes ab und wird in Vorversuchen so bestimmt, dass infolge der Exothermie der Reaktion ein Temperaturmaximum erreicht wird, welches ausreicht, um das eingesetzte hochschmelzende, feste Polyisocyanat im Reaktionsgemisch aufzuschmelzen bzw. um eine klare homogene Schmelze zu erhalten. Bei Verwendung von NDI liegt das erforderliche Temperaturmaximum etwa im Bereich von 120 bis 140°C, besonders bevorzugt von 125 bis 130°C. Nach Erreichen einer klaren, homogenen Schmelze (Ende der Reaktion) wird das erhaltene NCO-Prepolymere rasch auf die für die Kettenverlängerung notwendige Temperatur abgekühlt; die Starttemperatur für die Kettenverlängerung liegt im Bereich von 50°C bis 135°C und hängt von der Art des Kettenverlängerers, der Viskosität des Prepolymeren und dessen NCO-Gehalt ab. Sie wird so gewählt, dass eine ausreichende Gießzeit bei hinreichend niedriger Viskosität der reagierenden Schmelze gegeben ist.

In speziellen Fällen kann auch ein One-Shot-Verfahren, bei dem alle zerewitinoff-aktiven Reaktionskomponenten vermischt werden und gleichzeitig mit der NCO-Komponente zur Umsetzung gebracht werden, durchgeführt werden.

Selbstverständlich können auch Mischvarianten von One-Shot- und Prepolymerverfahren zum Einsatz kommen, etwa dergestalt, dass Teile des Polyols nicht in das Prepolymer eingearbeitet werden, sondern im sogenannten Polyol-Splitting-Verfahren auf die Kettenverlängererseite verlagert werden (also nach der Herstellung des Prepolymeren zusammen mit dem Kettenverlängerer eingesetzt werden).

Die Kettenverlängerer, die mit den erhaltenen NCO-Prepolymeren umgesetzt werden, sind im Wesentlichen aliphatische Diole mit zwei primären Hydroxylgruppen und einem zahlenmittleren Molekulargewicht von 62 bis 200 g/mol, z.B. die aus der Literatur bekannten, linearen, aliphatischen $\alpha,\omega$-Diole mit 2 bis 12 C-Atomen, bevorzugt 1,4-Butandiol, 1,6-Hexandiol, ethoxyliertes Hydrochinon und Cyclohexandiol, einzeln oder als Gemische. Als weitere Reaktionskomponenten kommen neben den Kettenverlängerern, wie bereits oben ausgeführt, die Polyole b1) und/oder b2) in Betracht, die bei der Herstellung der NCO-Prepolymeren verwendet werden, sowie auch solche Polyetherpolyole die mit den Polyolen b1) und b2) phasenkompatibel sind, wie z.B. Polyetherpolyole aus der Gruppe der Polyalkylenoxide. Daneben können zur Herstellung von Gießelastomeren selbstverständlich auch höherfunktionelle Polyole, wie z.B. Triole (z.B. 1,1,1-Trimethylolpropan) in geringen Anteilen als Kettenverlängerer mitverwendet oder auch ausschließlich verwendet werden. Selbstverständlich können auch aromatische Diamine wie z.B. Methylen-bis-(ortho-chloro)anilin (MOCA), 3,5-Diamino-p-chloroisobutylbenzoat (Baytec-1604), Trimethylenglycoldi-p-aminobenzoat (Polacure 740M) und 3,5-Dimethylthio-2,4-toluoldiamin/3,5-Dimethylthio-2,6-toluoldiamin (Ethacure 300), 4,4'-Methylenbis(3-chloro-2,6-diethylanilin) (MCDEA) oder 3,5-Diethyltoluol-2,4-diamin/3,5-Diethyltoluol-2,6-diamin (DETDA) als Kettenverlängerer verwendet oder mitverwendet werden.

Zur Herstellung von geschäumten Gießelastomeren wird als Kettenverlängerer oder zusätzlich zum Kettenverlängerer Wasser eingesetzt.

Weiterhin können Hilfs- und Zusatzstoffe, wie etwa Katalysatoren, Stabilsatoren, UV-Schutzmittel, Antioxidantien, Hydrolyseschutzmittel, einbaufähige Farbstoffe sowie Farbpigmente eingesetzt werden.

Beispiele für Katalysatoren sind Trialkylamine, Diazabicyclooctan, Zinn-dioctoat, Dibutylzinndilaurat, N-Alkylmorpholin, Blei-, Zink-, Kalzium-, Magnesiumoctoat, die entsprechenden Naphthenate, p-Nitrophenolat, usw.

Beispiele für Stabilisatoren sind Broenstedt- und Lewis-Säuren, wie etwa Salzsäure, Benzoylchlorid, Organomineralsäuren, z.B. Dibutylphosphat, weiterhin Adipinsäure, Äpfelsäure, Bernsteinsäure, Traubensäure oder Zitronensäure.

Beispiele für UV-Schutzmittel und Hydrolyseschutzmittel sind 2,6-Di-tert.-butyl-4-methylphenol und Carbodiimide.

Einbaufähige Farbstoffe sind solche, die über zerewitinoff-aktive Wasserstoffatome verfügen, die also mit NCO-Gruppen abreagieren können.

Weitere Hilfs- und Zusatzstoffe umfassen Emulgatoren, Schaumstabilisatoren, Zellregler und Füllstoffe. Eine Übersicht ist in G. Oertel, Polyurethane Handbook, 2nd edition, Carl Hanser Verlag, München, 1994, Kap. 3.4., enthalten.

Die geschäumten Gießelastomeren weisen vorzugsweise Dichten von 0,3 bis 1,0, bevorzugt 0,5 bis 0,8 g/cm$^3$ auf. Die nicht geschäumten Gießelastomere haben im ungefüllten Zustand bevorzugt Dichten von 1,0 bis 1,15 g/cm$^3$.

Die erfindungsgemäßen Gießelastomere werden vorzugsweise als Schwingungsisolierelemente zur Schwingungsisolierung von Maschinen aller Art, vorzugsweise im Eisenbahnfahrbahn-, im Schiffs- und Automobilbau eingesetzt, können grundsätzlich aber darüber hinaus auch in anderen Elastomer-, Beschichtungs- und Dichtstoffanwendungen Verwendung finden. Beispielhaft seien genannt: Räder und Reifen, Walzenbeschichtungen, Feder- und Dämpfungselemente, elastische Fahrzeugkupplungen, hoch abriebfeste Bauteile, z.B. Siebe, Dichtungselemente, etwa Dichtungsringe, Rakel, Dehnungsfugenfüller, die extremen Temperaturbelastungen ausgesetzt sind, im Korrosionsschutz, als Isolatoren und Schalter.

Die Erfindung soll anhand der nachfolgenden Beispiele näher erläutert werden.

### Beispiele

### Verwendete Rohstoffe

| | |
|---|---|
| Terathane® 2900 - | Polytetramethylenetherglykol mit Hydroxylendgruppen der Fa. Invista mit einem Molekulargewicht von 2900 Da und einer OH-Funktionalität von 2. |
| Terathane® 2000 - | Polytetramethylenetherglykol der Fa. Invista mit einem Molekulargewicht von 2000 Da und einer OH-Funktionalität von 2. |
| Terathane® 1000 - | Polytetramethylenetherglykol der Fa. Invista mit einem Molekulargewicht von 1000 Da und einer OH-Funktionalität von 2. |
| Acclaim® 2200N - | Poly(propylenoxid) mit Hydroxylendgruppen der Fa. Bayer MaterialScience AG mit einem Molekulargewicht von 2000 Da und einer OH-Funktionalität von 2, hergestellt nach dem Doppelmetallcyanidkatalyseverfahren. |
| Acclaim® 1000N - | Poly(propylenoxid) der Fa. Bayer MaterialScience AG mit einem Molekulargewicht von 1000 Da und einer OH-Funktionalität von 2, hergestellt nach dem Doppelmetallcyanidkatalyseverfahren. |
| Acclaim® 4200 - | Poly(propylenoxid) der Fa. Bayer MaterialScience AG mit einem Molekulargewicht von 4000 Da und einer OH-Funktionalität von 2, hergestellt nach dem Doppelmetallcyanidkatalyseverfahren. |
| Desmophen® 3600 - | Poly(propylenoxid) der Fa. Bayer MaterialScience AG mit einem Molekulargewicht von 2000 Da und einer Starter-OH-Funktionalität von 2, hergestellt nach dem Doppelmetallcyanidkatalyseverfahren. |
| Vulkollan® 2000 MM - | Polyadipatpolyol der Fa. Bayer MaterialScience AG mit einem Molekulargewicht von 2000 Da und einer OH-Funktionalität von 2. |
| Vulkollan® 2000 MZ - | Polyadipatpolyol der Fa. Bayer MaterialScience AG mit einem Molekulargewicht von 2000 Da und einer OH-Funktionalität von 2. |

Vulkollan® 2001 KS - Polyadipatpolyol der Fa. Bayer MaterialScience AG mit einem Molekulargewicht von 2000 Da und einer OH-Funktionalität von 2.

Stabaxol® 1 - Hydrolyseschutzmittel für Polyester-Polyurethan-Elastomere, monomeres Carbodiimid der Fa. Rheinchemie.

Emulgator SM - Wässrige Fettsäuresulfonatlösung der Fa. Rheinchemie, Vernetzer für zellige Heißgießelastomere.

Desmorapid® 726B - Tertiärer Aminkatalysator der Fa. Rheinchemie.

Verzögerer 1092 - Emulgatorgemisch auf Fettsäureesterbasis der Fa. Rheinchemie Zusatzmittel für die Herstellung von zelligem Vulkollan®.

Indrosil® 2000 - Silicone-basiertes externes Trennmittel der Fa. Indroma Chemikalien.

**A) Herstellung von massiven PUR-Gießelastomeren**

**Beispiel 1:** (erfindungsgemäß)

29 Gew.-Tle. Terathane® 2900, 20 Gew.-Tle. Terathane® 2000, 10 Gew.-Tle. Terathane® 1000, 20 Gew.-Tle. Acclaim® 2200N und 10 Gew.-Tle. Acclaim® 1000N wurden auf 110°C erwärmt, entgast. Man erhöhte die Temperatur auf 128°C und gab 21 Gew.-Tln 1,5-Naphthalindiisocyanat unter Rühren hinzu und legte Vakuum an. Nach 15 Minuten Reaktionszeit war die Exothermie des NCO-Prepolymeren abgeklungen und die Prepolymerschmelze wies eine Temperatur von 123°C auf. Man verrührte mit 3,3 Gew.-Tln. 1,4-Butandiol und goß das noch dünnflüssige Reaktionsgemisch in auf 110°C vorgewärmte Formen, entformte nach 30 Minuten und temperte im Umlufttrockenschrank für 16 Std. bei 110°C nach. Die mechanischen Eigenschaften wurden bestimmt (siehe Tabelle 1).

Beispiele 2 bis 4 und Vergleichsbeispiele 5 bis 10:

Die Beispiele 2 bis 4 sowie die Vergleichsbeispiele 5 bis 10 wurden wie in Beispiel 1 beschrieben durchgeführt. Die genauen Zusammensetzungen sind der Tabelle 1 bzw. der Tabelle 2 zu entnehmen.

**Tabelle 1:** Rezeptur und Eigenschaften von nicht geschäumtem Gießelastomeren (erfindungsgemäß)

| | Gießelastomer: | | A1 | A2 | A3 | A4 |
|---|---|---|---|---|---|---|
| **Rezeptur Prepolymerseite:** | | | | | | |
| | Terathane® 2900 | [Gew.-Tle] | 29 | 29 | 29 | 29 |
| | Terathane® 2000 | [Gew.-Tle] | 20 | 20 | 20 | 20 |
| | Terathane® 1000 | [Gew.-Tle] | 10 | 10 | 10 | 10 |
| | Acclaim® 2200N | [Gew.-Tle] | 20 | 20 | 20 | 20 |
| | Acclaim® 1000N | [Gew.-Tle] | 10 | 10 | 10 | 10 |
| | Molanteil der C3-Polyether in den Polyolen (C3- und C4-Polyethern) | [Mol-%] | 40 | 40 | 40 | 40 |
| | Rizinusöl | [Gew.-Tle] | 0 | 0 | 0,75 | 1,5 |
| | 1,5-Naphthalindiisocyanat | [Gew.-Tle] | 21 | 21 | 21,23 | 21,46 |
| **Kettenverlängerer:** | | | | | | |
| | 11,4-butandiol | [Gew.-Tle] | 3,3 | 3,3 | 3,3 | 3,3 |

(fortgesetzt)

| **Kenngrößen der Umsetzung**: | | | | | | |
|---|---|---|---|---|---|---|
| | Gesamtkennzahl | | 113 | 113 | 113 | 113 |
| | OH-Zahl Polyol | [mg KOH/g] | 63 | 63 | 63 | 63 |
| | Prepolymertemperatur | [°C] | 123 | 123,6 | 125 | 125 |
| | Gießzeit | [s] | 110 | 110 | 110 | 110 |
| | Abhebezeit | [min] | 10 | 7 | 7 | 7 |
| | Formtemperatur | [°C] | 110 | 110 | 110 | 110 |
| | Entformung nach | [min] | 30 | 30 | 30 | 30 |
| **Mechanische Eigenschaften:** | | | | | | |
| DIN 53505 | Shore A-Härte | [Shore A] | 94 | 93 | 92 | 92 |
| DIN 53505 | Shore D-Härte | [Shore D] | 33 | 40 | 39 | 38 |
| DIN 53504 | Spannung 100% | [MPa] | 7,35 | 6,59 | 6,5 | 6,23 |
| DIN 53504 | Spannung 300% | [MPa] | 10,98 | 10,33 | 10,22 | 10 |
| DIN 53504 | Reißspannung | [MPa] | 30,27 | 29,23 | 24,55 | 30,42 |
| DIN 53504 | Reißdehnung | [%] | 727 | 586 | 558 | 610 |
| DIN 53515 | Weiterreißwiderstand (Graves) | [kN/m] | 35 | 32 | 32 | 32 |
| DIN 53512 | Stoßelastizität | [%] | 75 | 73 | 73 | 72 |
| DIN 53516 | Abrieb | [mm$^3$] | 51 | 61 | 57 | 58 |
| DIN 53420 | Dichte | [g/mm$^3$] | 1,07 | 1,07 | 1,082 | 1,085 |
| DIN 53517 | Druckverformungsrest, 22°C | [%] | 14,1 | 10,6 | 11,6 | 12,9 |
| DIN 53517 | Druckverformungsrest, 70°C | [%] | 24,1 | 19,9 | 20,6 | 20 |
| DIN 53517 | Druckverformungsrest, 100°C | [%] | 43,2 | 45,4 | 45,4 | 44,4 |
| **Mechanisch-dynamische Eigenschaften:** | | | | | | |
| DIN EN ISO 6721-2 | Speichermodul, G' bei -30°C | [MPa] | 39,7 | 36,8 | 36,6 | 36,6 |
| DIN EN ISO 6721-2 | Speichermodul, G' bei 50°C | [MPa] | 35,7 | 35,2 | 35,1 | 33,9 |
| DIN EN ISO 6721-2 | Speichermodul, G' bei 110°C | [MPa] | 38,4 | 37,5 | 37,6 | 36,2 |
| | Quotient aus $\dfrac{\text{G' bei -30°C}}{\text{G' bei 110°C}}$ | | 1,03 | 0,98 | 0,98 | 1,01 |
| DIN EN ISO 6721-2 | Verlustfaktor tanδ bei -30°C | | 0,0896 | 0,0994 | 0,110 | 0,115 |
| DIN EN ISO 6721-2 | Verlustfaktor tanδ bei 50°C | | 0,0176 | 0,0138 | 0,015 | 0,015 |
| DIN EN ISO 6721-2 | Verlustfaktor tanδ bei 110°C | | 0,0150 | 0,0156 | 0,015 | 0,015 |
| | tanδ min. | [°C] | 105 | 30 | 30 | 30 |
| | tanδ max. | [°C] | < -60 | -55 | -55 | -60 |

**Tabelle 2:** Rezeptur und Eigenschaften von nicht geschäumten Gießelastomeren (nicht erfindungsgemäß)

| Gießelastomer: | | | A5 V | A6 V | A7 V | A8 V | A9 V | A10 V |
|---|---|---|---|---|---|---|---|---|
| **Rezeptur Prepolymerseite:** | | | | | | | | |
| Acclaim® 1000N | | [Gew.-Tle] | | | | | | 20 |
| Acclaim® 2200 | | [Gew.-Tle] | 100 | | | | | 51,4 |
| Acclaim® 4200 | | [Gew.-Tle] | | | | | | 17,6 |
| Desmophen® 3600 | | [Gew.-Tle] | | 100 | | | | |
| Desmophen® 2000MM | | [Gew.-Tle] | | | 100 | | | |
| Terathane® 2900 | | [Gew.-Tle] | | | | | 29 | |
| Terathane® 2000 | | [Gew.-Tle] | | | | 100 | 40 | |
| Terathane® 1000 | | [Gew.-Tle] | | | | | 20 | |
| Molanteil der C3-Polyether in den Polyolen (C3- und C4-Polyethern) | | [Mol-%] | 100 | 100 | 0 | 0 | 0 | 100 |
| 1,5-Naphthalindiisocyanat | | [Gew. Tle] | 21 | 21 | 21 | 21 | 21 | 21 |
| **Kettenverlängerer:** | | | | | | | | |
| 1,4-Butandiol | | [Gew.-Tle] | 3,5 | 3,5 | 3,5 | 3,3 | 3,3 | 3,3 |
| **Kenngrößen der Umsetzung:** | | | | | | | | |
| Gesamtkennzahl | | | 113 | 113 | 113 | 113 | 113 | 113 |
| OH-Zahl Polyol | | [mg KOH/g] | 54,7 | 56 | 56 | 56 | 63 | 63 |
| Polyoltemperatur | | [°C] | 130 | 130 | 126 | 129 | 129 | 129 |
| Gießzeit | | [s] | 112 | 165 | 120 | 125 | 110 | 180 |
| Abhebezeit | | [min] | 12 | 18 | 12 | 7 | 5 | 12 |
| Entformungszeit | | [min] | 16 | 23 | 20 | 30 | 30 | 30 |
| Formtemperatur | | [°C] | 110 | 110 | 110 | 110 | 110 | 110 |
| Tischtemperatur | | [°C] | 117 | 117 | 117 | 115 | 5 | 115 |
| Nachheizzeit | | [h] | 24 | 24 | 24 | 24 | 24 | 24 |
| Nachheiztemperatur | | [°C] | 110 | 110 | 110 | 110 | 110 | 110 |
| **Mechanische Eigenschaften:** | | | | | | | | |
| Shore Härte A | DIN 53505 | [Shore A] | 86 | 86 | 88 | 94 | 95 | 87 |
| Shore Härte D | DIN 53505 | [Shore D] | 29 | 23 | 36 | 43 | 44 | 32 |
| Spannung 100% | DIN 53504 | [MPa] | 5,1 | 5,12 | 6,2 | 7,4 | 8,11 | 5,11 |
| Spannung 300% | DIN 53504 | [MPa] | 7,53 | 7,29 | 15 | 12,57 | 13,05 | 7,8 |
| Reißfestigkeitsspannung | DIN 53504 | [MPa] | 21,08 | 19,46 | 43 | 38,83 | 39,35 | 14,85 |
| Reißdehnung | DIN 53504 | [%] | 796 | 888 | 650 | 542 | 542 | 542 |
| Weiterreißfestigkeit(Graves) | DIN 53515 | [kN/m] | 27,1 | 30,5 | 38 | 34 | 38 | 25 |
| Stoßelastizität | DIN 53512 | [%] | 70 | 70 | 59 | 73 | 70 | 67 |
| Abrieb | DIN 53516 | [mm³] | 95 | 111 | 42 | 31 | 29 | 124 |
| Dichte | DIN 53420 | [g/mm³] | | | | 1,07 | 1,069 | 1,071 |
| Druckverformungsrest, 22°C | DIN 53517 | [%] | | | | 15,4 | 14,9 | 11,5 |
| Druckverformungsrest, 70°C | DIN 53517 | [%] | 35,5 | 45,1 | 20 | 20,8 | 25,3 | 26 |
| Druckverformungsrest, 100°C | DIN 53517 | [%] | | | | 38,9 | 45,2 | 60,6 |
| **Mechanisch-dynamische Eigenschaften:** | | | | | | | | |
| Speichermodul, G' bei -30°C | DIN EN ISO 6721-2 | [MPa] | 23,0 | 19,34 | 250 | 93,4 | 93,0 | 33,1 |
| Speichermodul, G' bei 50°C | | [MPa] | 20,71 | 18,63 | 25,4 | 39,0 | 43,5 | 22,8 |
| Speichermodul, G' bei 110°C | | [MPa] | 25,5 | 21,11 | 24,5 | 42,1 | 45,2 | 25,5 |
| Quotient aus G' bei -30°C / G' bei 110°C | | | 0,90 | 0,92 | 10,2 | 2,2 | 2,06 | 1,29 |
| Verlustfaktor tanδ bei -30°C | | | 0,263 | 0,17 | 0,29 | 0,0968 | 0,1028 | 0,3604 |
| Verlustfaktor tanδ bei 50°C | | | 0,0124 | 0,012 | 0,028 | 0,0100 | 0,0120 | 0,0111 |
| Verlustfaktor tanδ bei 110°C | | | 0,0122 | 0,012 | 0,036 | 0,0083 | 0,0118 | 0,0139 |
| tanδ min. | | [°C] | 105 | 95,1 | 40 | 105 | 105 | 70 |
| tanδ max. | | [°C] | -60 | -60 | -23 | -60 | -60 | -35 |

Die erfindungsgemäßen massiven Gießelastomere wurden gemäß der Rezeptur in Tabelle 1 hergestellt. Das Elastomere A1 bis A4 erfüllen alle Kriterien des Anspruches 1.

Die Vergleichsbeispiele in Tabelle 2 (Elastomere A5 V - A10 V) entsprechen nicht der beanspruchten Zusammensetzung. Sie schneiden in mindestens einer wichtigen Eigenschaft deutlich schlechter ab als die erfindungsgemäßen Elastomere. A5 V liegt z.B. bezüglich der Temperaturabhängigkeit des Speichermoduls mit einem Wert von 0,90 sehr gut im Bereich, der durch die erfindungsgemäßen Systeme aus Tabelle 1 definiert ist, fällt aber bzgl. des Abriebs, des Druckverformungsrestes so weit ab, dass das Elastomer letztlich unbrauchbar wird, wobei das Elastomer außerdem viel weicher ist. Analoges gilt für die Elastomere A6 V und A10 V. Beim Esterbasierten A7 V und bei den rein C4-etherbasierten Elastomeren A8 V und A9 V liegen die Verhältnisse umgekehrt: Sie sind vergleichbar mit den erfindungsgemäßen Systemen bzgl. Druckverformungsrest und Abrieb, aber viel schlechter bei der Temperaturabhängigkeit des Speichermoduls, d.h. sie haben doppelt bis 10-mal höhere Werte beim Quotienten aus G' (- 30°C) und G' (110°C). Analoge Betrachtungen können auch für weitere Kenngrößen der Materialeigenschaften durchgeführt werden, wobei hier die Daten für Spannung (100 und 300%), Reißspannung, Weiterreißfestigkeit und Verlustfaktor tanδ zu nennen sind. Beide Elastomere A5 V und A6 V erreichen nicht die geforderten Eigenschaften. In Summe sind die nicht erfindungsgemäßen Systeme den erfindungsgemäßen eindeutig unterlegen. Nur wenn die im beanspruchten Bereich liegenden Rezepturen eingesetzt werden, werden besonders günstige Kombinationen bzgl. aller relevanten Werkstoffkenngrößen erhalten.

## B) Herstellug von geschäumten Gießelastomeren

**Beispiel 2** (Vergleich):

Die Herstellung des Prepolymeren erfolgte diskontuierlich in einem Reaktionskessel, indem man 90 Gew.-Teile des Polyols Vulkollan® 2000 MZ auf 70°C vorwärmte und 0,005 Gew.-Tle. Zitronensäure und 1,5 Gew.-Tle. Rizinusöl einrührte. Man erwärmte auf 130°C und rührte 24,5 Gew.-Teile 1,5-Naphthalindiisocyanat ein. Nach 15 Minuten Reaktionszeit war die Exothermie des NCO-Prepolymeren abgeklungen und die Prepolymerschmelze wies eine Temperatur von 125°C auf. Man kühlte innerhalb 10 Minuten auf 90°C ab und verrührte mit 1 Gew.-Teil Stabaxol 1. In einer Gießmaschine (ElastoLine, Fa. Hennecke) wurde das bei 45°C temperierte Kettenverlängerergemisch (10 Gew.-Tle. Vulkollan® 2001KS, 2,15 Gew.-Tle. Emulgator SM, 0,0215 Gew.-Tle. Desmorapid® 726b und 0,215 Gew.-Tle. Verzögerer 1092) mit dem Prepolymer umgesetzt und in 80°C heiße, mit Trennmittel (Indrosil® 2000, Fa. Indroma Chemikalien) vorbehandelte Formen gegossen, wobei das Reaktionsgemisch sofort aufzuschäumen begann. Die Formen wurden nach Befüllen mit der für die angestrebte Dichte notwendigen Füllmenge verschlossen. Man entformte nach 100 Minuten und temperte im Umlufttrockenschrank für 16 Std. bei 110°C nach. Die mechanischen Eigenschaften wurden bestimmt (siehe Tabelle 3).

**Beispiel 1** (erfindungsgemäß):

Das Beispiel 1 wurde wie in Beispiel 2 (Vergleich) beschrieben durchgeführt. Die genaue Zusammensetzung ist der Tabelle 3 zu entnehmen.

**Tabelle 3:** Rezepturen und Eigenschaften von geschäumten Gießelastomeren

| Gießelastomer | | | B 1 | B2 V |
|---|---|---|---|---|
| | | Norm | | |
| **Rezeptur Prepolymerseite:** | | | | |
| Vulkollan® 2000MZ | [Gew.-Tle.] | | | 90 |
| Terathane® 2000 | [Gew.-Tle.] | | 20 | |
| Acclaim® 2200N | [Gew.-Tle.] | | 20 | |
| Terathane® 2900 | [Gew.-Tle.] | | 29 | |
| Acclaim® 1000 | [Gew.-Tle.] | | 10 | |
| Rizinusöl, OHZ 165 | [Gew.-Tle.] | | 1,5 | 1,5 |
| Stabaxol® 1 | [Gew.-Tle.] | | | 1,0 |
| 1,5-Naphthalindiisocyanat | [Gew.-Tle.] | | 21 | 24,5 |
| Prepolymer, gesamt | [Gew.-Tle.] | | 101,5 | 117,00 |

(fortgesetzt)

| Rezeptur Kettenverlängererseite: | | | | |
|---|---|---|---|---|
| Terathane® 1000 | [(Gew.-Tle.] | | 10 | |
| Vulkollan® 2001KS | [Gew.-Tle.] | | | 10 |
| Emulgator WM | [Gew.-Tle.] | | 1 | |
| Emulgator SM | [Gew.-Tle.] | | | 2,15 |
| Wasser | [Gew.-Tle.] | | 0.82 | |
| Desmorapid® 726b | [Gew.-Tle] | | 0,03 | 0,0215 |
| Verzögerer 1092 | [Gew.-Tle.] | | | 0,215 |
| Kettenverlängererseite gesamt | [Gew.-Tle.] | | 11,85 | 12.3865 |
| Kennzahl Rohstoffe | | | 105 | 106 |
| Molanteil der C3-Polyether in den Polyolen (C3- und C4-Polyethern) | [Mol-%] | | 40 | 0 |
| **Mechanische Eigenschaften:** | | | | |
| Shore Härte A | [ShoreA] | DIN 53505 | 64 | |
| Shore Härte D | [Shore D] | DIN 53505 | 17 | |
| Abrieb | [$mm^3$] | DIN 53516 | 34 | |
| Stoßelastizität | [%] | DIN 53512 | 80 | |
| DVR 22°C | [%] | DIN 53517 | 6,7 | 4 |
| DVR 70°C | [%] | DIN 53517 | 14,6 | 9 |
| DVR 100°C | [%] | DIN 53517 | 32,4 | |
| Spannung, 100% | [MPa] | DIN 53504 | 3,66 | |
| Spannung, 300% | [MPa] | DIN 53504 | 5,95 | |
| Reißspannung | [Mpa] | DIN 53504 | 8,4 | 10 |
| Reißdehnung | [%] | DIN 53504 | 511 | 490 |
| Graves | [kN/m] | DIN 53515 | 11.6 | 24 |
| Dichte | [$g/cm^3$] | DIN 53420 | 760 | 742 |
| Speichermodul, G' bei -30°C | [MPa] | DIN EN ISO 6721-2 | 4,5 | 150 |
| Speichermodul, G' bei 50°C | [MPa] | DIN EN ISO 6721-2 | 3,7 | 2,3 |
| Speichermodul, G' bei 110°C | [MPa] | DIN EN ISO 6721-2 | 4,3 | 2,20 |
| Quotient aus $\dfrac{\text{G' bei } -30°C}{\text{G' bei } 110°C}$ | | | 1,05 | 68 |
| Verlustfaktor tan$\delta$ bei -30°C | | DIN EN ISO 6721-2 | 0,123 | 0,55 |
| Verlustfaktor tan$\delta$ bei 50°C | | DIN EN ISO 6721-2 | 0,008 | 0,022 |
| Verlustfaktor tan$\delta$ bei 110°C | | DIN EN ISO 6721-2 | 0,008 | 0,022 |
| tan$\delta$ max | [°C] | DIN EN ISO 6721-2 | -55 | -25 |
| tan$\delta$ min | [°C] | DIN EN ISO 6721-2 | 65 | n.b. |

(fortgesetzt)

| Mechanische Eigenschaften: | | | | | |
|---|---|---|---|---|---|
| Erweichungstemperatur+ | [°C] | | | 195 | 175 |
| + Erweichungstemperatur: Die Temperatur, bei der der Speichermodul bei 50 % des bei 110°C gemessenen Wertes liegt. | | | | | |

**Patentansprüche**

1. Gießelastomere erhältlich aus

   A) einem NCO Prepolymeren aus

   a) einem hochschmelzenden Polyisocyanat aus der Gruppe bestehend aus 1,5-Naphthalindiisocyanat (NDI), Para-Phenylendiisocyanat (PPDI) und 3,3'-Dimethyl-4,4'-biphenyldiisocyanat (TODI) und
   b) einem Polyolgemisch aus

   b1) 50 - 85 Mol.-%, bezogen auf b1) und b2), $\alpha$-Hydro-$\omega$-hydroxypoly(oxytetramethylen) mit Molekulargewichten von 500 bis 5000 g/mol und einer Hydroxylfunktionalität von 2,0
   b2) 15 - 50 Mol.-%, bezogen auf b1) und b2), $\alpha$-Hydro-$\omega$-hydroxypoly(oxypropylen-1,2) und/oder $\alpha$-Hydro-$\omega$-hydroxy-poly-(oxypropylen-1,2-co-oxyethylen) mit Molekulargewichten von 900 bis 4000 g/mol und Hydroxylfunktionalitäten von 1,9 bis 2,7,

   wobei die Hydroxylzahl des Polyolgemisches aus b1) und b2) im Bereich von 36 bis 90 mg KOH/g liegt, und

   B) mindestens einem Kettenverlängerer ausgewählt aus der Gruppe bestehend aus aliphatischen Diolen mit zwei, bevorzugt primären Hydroxylgruppen und einem zahlenmittleren Molekulargewicht von 62 bis 202 g/mol, trifunktionellen Polyolen, Polyolen b1), Polyolen b2), Wasser und Gemischen davon sowie aromatischen Diaminen,
   C) gegebenenfalls Hilfs- und Zusatzstoffen,

   wobei die Kennzahl (molares Verhältnis von NCO-Gruppen zu Zerewitinoff-aktiven Gruppen aller Komponenten) in einem Bereich von 1,04 bis 1,25 liegt und der Quotient des bei -30°C und des bei 110°C gemessenen Speichermoduls G' (gemäß DIN EN ISO 6721-1) im Bereich von 0,8 bis 2,0 liegt.

2. Verfahren zur Herstellung von Gießelastomeren nach dem Prepolymerverfahren, **dadurch gekennzeichnet, dass**

   I) ein hochschmelzendes Polyisocyanat a) aus der Gruppe bestehend aus 1,5-Naphthalindiisocyanat (NDI), Para-Phenylendiisocyanat (PPDI) und 3,3'-Dimethyl-4,4'-biphenyldiisocyanat (TODI) mit einem Polyolgemisch b) aus

   b1) 50 - 85 Mol-%, bezogen auf b1) und b2), $\alpha$-Hydro-$\omega$-hydroxy-poly(oxytetramethylen) mit Molekulargewichten von 500 bis 5000 g/mol und OH-Funktionalitäten von 2,0 und
   b2) 15 - 50 Mol-%, bezogen auf b1) und b2), $\alpha$-Hydro-$\omega$-hydroxy-poly(oxypropylen-1,2) und/oder $\alpha$-Hydro-$\omega$-hydroxy-poly(oxy-propylen-1,2-cooxyethylen) mit Molekulargewichten von 900 bis 4000 g/mol und Hydroxylfunktionalitäten von 1,9 bis 2,7,

   zum NCO-Prepolymer umgesetzt wird, wobei die Hydroxylzahl des Polyolgemisches aus b1) und b2) im Bereich von 36 bis 90 mgKOH/g liegt,
   II) zum NCO-Prepolymer mindestens ein Kettenverlängerer ausgewählt aus der Gruppe bestehend aus aliphatischen Diolen mit zwei, bevorzugt primären Hydroxylgruppen und einem zahlenmittleren Molekulargewicht von 62 bis 202 g/mol, trifunktionellen Polyolen, Polyolen b1), Polyolen b2), Wasser und Gemischen davon und aromatischen Diaminen und gegebenenfalls Hilfs- und Zusatzstoffe zur Herstellung der Elastomeren gegeben werden,
   wobei eine auf die eingesetzten Komponenten bezogene Kennzahl (molares Verhältnis von NCO-Gruppen zu Zerewitinoff-aktiven Gruppen) von 1,04 bis 1,25 eingestellt wird und der Quotient des bei -30°C und des bei 110°C gemessenen Speichermoduls G' im Bereich von 0,8 bis 2,0 liegt.

3. Verwendung der Gießelastomere gemäß Anspruch 1 als Schwingungsentkopplungselemente zur Schwingungsisolierung von Maschinen aller Art, vorzugsweise im Eisenbahnfahrbahnbau, im Schiffs- und Automobilbau sowie in anderen Elastomer-, Beschichtungs- und Dichtstoffanwendungen.

**Claims**

1. Cast elastomers obtainable from

A) an NCO prepolymer consisting of

a) a high-melting polyisocyanate from the group consisting of 1,5-naphthalene diisocyanate (NDI), para-phenylene diisocyanate (PPDI) and 3,3'-dimethyl-4,4'-biphenyl diisocyanate (TODI), and
b) a polyol mixture, consisting of

b1) 50 to 85 mol%, based on b1) and b2), of $\alpha$-hydro-$\omega$-hydroxypoly(oxytetramethylene) with molecular weights from 500 to 5000 g/mol and a hydroxyl functionality of 2.0,
b2) 15 to 50 mol%, based on b1) and b2), of $\alpha$-hydro-$\omega$-hydroxypoly(oxypropylene-1,2) and/or $\alpha$-hydro-$\omega$-hydroxypoly(oxypropylene-1,2-co-oxyethylene) with molecular weights of 900 to 4000 g/mol and hydroxyl functionalities of 1.9 to 2.7,

wherein the hydroxyl value of the mixture of b1) and b2) is in the range from 36 to 90 mg KOH/g
and

B) at least one chain extender selected from the group consisting of aliphatic diols having two preferably primary hydroxyl groups and a number-average molecular weight of 62 to 202 g/mol, trifunctional polyols, polyols b1), polyols b2), water and mixtures thereof and aromatic diamines,
C) optionally auxiliary substances and additives,

wherein the characteristic value (molar ratio of NCO groups to Zerewitinoff-active groups of all components) is in a range from 1.04 to 1.25 and the quotient of the storage modulus G' measured at -30°C and at 110°C (according to DIN EN ISO 6721-1) is in the range from 0.8 to 2.0.

2. Process for the production of cast elastomers by the prepolymer process, **characterised in that**

I) a high-melting polyisocyanate a) from the group consisting of 1,5-naphthalene diisocyanate (NDI), para-phenylene diisocyanate (PPDI) and 3,3'-dimethyl-4,4'-biphenyl diisocyanate (TODI), is reacted with a polyol mixture b) consisting of

b1) 50 to 85 mol%, based on b1) and b2), of $\alpha$-hydro-$\omega$-hydroxypoly(oxytetramethylene) with molecular weights from 500 to 5000 g/mol and OH functionalities of 2.0 and
b2) 15 to 50 mol%, based on b1) and b2), of $\alpha$-hydro-$\omega$-hydroxypoly(oxypropylene-1,2) and/or $\alpha$-hydro-$\omega$-hydroxypoly(oxypropylene-1,2-co-oxyethylene) with molecular weights of 900 to 4000 g/mol and hydroxyl functionalities of 1.9 to 2.7,

to form the NCO prepolymer, wherein the hydroxyl value of the polyol mixture comprising b1) and b2) is in the range from 36 to 90 mg KOH/g,
II) at least one chain extender selected from the group consisting of aliphatic diols having two preferably primary hydroxyl groups and a number-average molecular weight of 62 to 202 g/mol, trifunctional polyols, polyols b1), polyols b2), water and mixtures thereof and aromatic diamines and optionally auxiliary substances and additives are added to the NCO prepolymer to produce the elastomers,
wherein a characteristic value (molar ratio of NCO groups to Zerewitinoff-active groups) based on the components used of 1.04 to 1.25 is established and the quotient of the storage modulus G' measured at -30°C and at 110°C is in the range from 0.8 to 2.0.

3. Use of the cast elastomers according to claim 1 as vibration neutralising elements for the vibration isolation of machines of all types, preferably in railway construction, shipbuilding and automotive construction and also in other elastomer, coating and sealant applications.

**Revendications**

1. Elastomères de coulée pouvant être obtenus à partir de

   A) un prépolymère NCO de

   a) un polyisocyanate à haut point de fusion du groupe consistant en le 1,5-naphtalènediisocyanate (NDI), le paraphénylènediisocyanate (PPDI) et le 3,3'-diméthyl-4,4'-biphényldüsocyanate (TODI) et
   b) un mélange de polyols de

   b1) 50 - 85 mol %, par rapport à b1) et b2), d'$\alpha$-hydro-$\omega$-hydroxy-poly(oxytétraméthylène) ayant des poids moléculaires de 500 à 5000 g/mol et une fonctionnalité hydroxyle de 2,0
   b2) 15 - 50 mol %, par rapport à b1) et b2), d'$\alpha$-hydro-$\omega$-hydroxy-poly(oxypropylène-1,2) et/ou $\alpha$-hydro-$\omega$-hydroxy-poly(oxypropylène-1,2-co-oxyéthylène) ayant des poids moléculaires de 900 à 4 000 g/mol et des fonctionnalités hydroxyle de 1,9 à 2,7,

   où l'indice d'hydroxyle du mélange de polyols de b1) et b2) est situé dans le domaine de 36 à 90 mg de KOH/g, et
   B) au moins un agent d'allongement de chaîne choisi dans le groupe consistant en les diols aliphatiques ayant deux groupes hydroxyle de préférence primaires et un poids moléculaire moyen en nombre de 62 à 202 g/mol, les poyols trifonctionnels, les polyols b1), les polyols b2), l'eau et les mélanges de ceux-ci ainsi que les diamines aromatiques,
   C) éventuellement des adjuvants et additifs,

   où l'indice (rapport molaire des groupes NCO aux groupes actifs au sens de Zerewitinoff de tous les composants) est situé dans un domaine de 1,04 à 1,25 et le quotient du module d'accumulation G' mesuré à -30°C au module d'accumulation G' mesuré à 110°C (selon DIN EN ISO 6721-1) est situé dans le domaine de 0,8 à 2,0.

2. Procédé pour produire des élastomères de coulée selon le procédé au prépolymère **caractérisé en ce que**

   I) un polyisocyanate à haut point de fusion a) du groupe consistant en le 1,5-napthalènediisocyanate (NDI), le paraphénylènediisocyanate (PPDI) et le 3,3'-diméthyl-4,4'-biphényldüsocyanate (TODI) est converti avec un mélange de polyols b) de

   b1) 50 - 85 mol %, par rapport à b1) et b2), d'$\alpha$-hydro-$\omega$-hydroxy-poly(oxytétraméthylène) ayant des poids moléculaires de 500 à 5000 g/mol et des fonctionnalités OH de 2,0 et
   b2) 15 - 50 mol %, par rapport à b1) et b2), d'$\alpha$-hydro-$\omega$-hydroxy-poly(oxypropylène-1,2) et/ou $\omega$-hydro-$\omega$-hydroxy-poly(oxypropylène-1,2-co-oxyéthylène) ayant des poids moléculaires de 900 à 4 000 g/mol et des fonctionnalités hydroxyle de 1,9 à 2,7,
   en le prépolymère NCO où l'indice d'hydroxyle du mélange de polyols de b1) et b2) est situé dans le domaine de 36 à 90 mg de KOH/g,

   II) au prépolymère NCO est ajouté au moins un agent d'allongement de chaîne choisi dans le groupe consistant en les diols aliphatiques ayant deux groupes hydroxyle de préférence primaires et un poids moléculaire moyen en nombre de 62 à 202 g/mol, les polyols trifonctionnels, les polyols b1), les polyols b2), l'eau et les mélanges de ceux-ci et les diamines aromatiques et éventuellement des adjuvants et des additifs pour la production des élastomères,
   où un indice (rapport molaire des groupes NCO aux groupes actifs au sens de Zerewitinoff), rapporté aux composants utilisés, de 1,04 à 1,25 est établi et le quotient du module d'accumulation G' mesuré à -30°C au module d'accumulation G' mesuré à 110°C est situé dans le domaine de 0,8 à 2,0.

3. Utilisation des élastomères de coulée selon la revendication 1 comme éléments de neutralisation des vibrations pour l'isolation des vibrations de machines de tout type, de préférence dans la construction des voies de chemins de fer, dans la construction des navires et des automobiles ainsi que dans d'autres applications des élastomères, des revêtements et des agents d'étanchéité.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4311765 A
- GB 1366351 A
- US 43250796 B

**In der Beschreibung aufgeführte Nicht-Patentliteratur**

- **G. Oertel.** Polyurethane Handbook. Carl Hanser Verlag, 1994